# EUROPEAN PATENT APPLICATION

(11) **EP 2 214 456 A1**
(43) Date of publication of application: **04.08.2010**
(21) Application number: 10000529.7
(22) Date of filing: 20.01.2010
(51) Int. Cl.: H05B 33/08

(54) **LED lamp circuit**

(30) Priority: 22.01.2009 CN 200910036887; 22.01.2009 CN 200910036888
(71) Applicant: Nanker(Guang Zhou)Semiconductor Manufacturing Corp., Guangdong 510663 (CN)
(72) Inventor: Wu, Chun-Wei, Guangzhou 510663 Guangdong Province (CN)
(74) Representative: Kramer - Barske - Schmidtchen

(57) **Abstract**

The present invention discloses a high power LED lamp circuit with a fan provides advantages such as simple structure, high efficiency, low power consumption, energy saving, and longer lifetime. The LED lamp circuit comprises a rectifying-filtering circuit (1), an LED load (3), an output terminal (A) and a grounding terminal (G) for providing a DC power generated by passing an AC power through the rectifying-filtering circuit (1), the high power LED lamp circuit with a fan further comprises a constant current source (4), a fan driving circuit (6); the lamp circuit is formed by cascading the LED load (3), the constant current source (4) between the output terminal (A) and the grounding terminal (G), the LED lamp circuit is widely applicable in various kinds of LED lamps.

## Description

### BACKGROUND OF THE INVENTION

### 1. Field of the Invention

The present invention relates to a circuit for use with an LED lamp.

### 2. Description of the Related Art

Presently more LED applications are emerging, which includes LED lamps used in indoor lighting. It is common to use a plurality of high power LED chips in one lamp to achieve desirable brightness for lighting applications; however, the heat generated by the plurality of LED chips has affected the operation and lifetime of the LED lamp. Therefore, heat dissipation has become a critical issue for promoting LED lighting, particularly for promoting the high power LED lamps. Generally, traditional LED lamps adopt passive heat dissipation mechanism, in which a heat sink or the like is used for dissipating the heat generated by LED chips, since the heat sink requires much space to achieve better dissipating effects, the traditional LED lamps tend to be bulky and have complicated heat dissipation mechanism, furthermore, the passive heat dissipation mechanism can not provide satisfactory of heat dissipation effect. At this moment, there is no active heat dissipation mechanism using a heat dissipating fan ever disclosed.

Furthermore, common LED lamps have constant output voltages, which means the brightness of the LED lamp would remain the same during operation. However, in some cases, it is not necessary for the LED lamp to maintain the same brightness. For example, the LED lamp, such as street lamp, garden light, or porch light should be as bright as possible to provide good illumination when the night comes, but when it's late in the night, the LED lamp could be dimmer to save power.

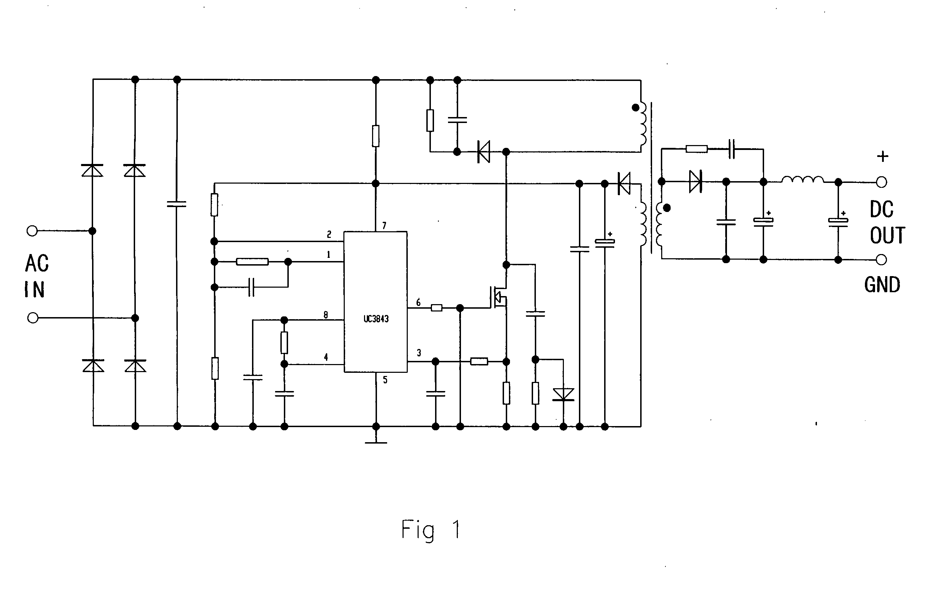

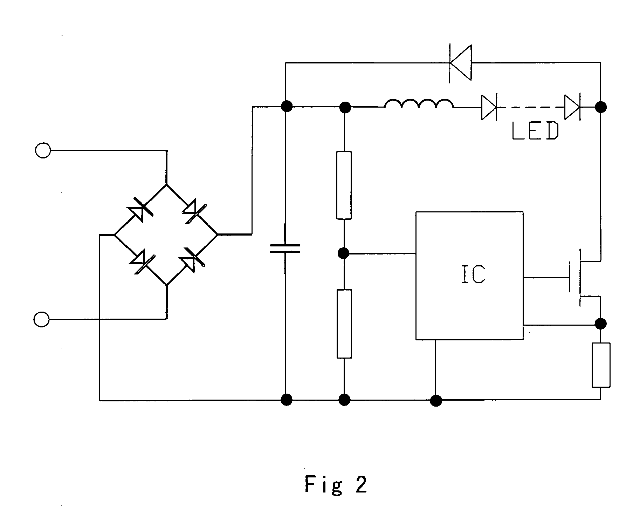

In the LED lamp circuit, although the LED chips do not consume a lot of power, it is necessary for the power supply to stably maintain the output current and voltage within a certain range, and the LED lamp circuit should provide over-current and over-voltage protection. Thus , it is common to use a constant current source or a voltage regulator, and sometimes an over-current protection circuit for some circuit elements. As described above, the LED lamp circuit could have disadvantages such as a large number of circuit elements, a complicated circuit structure, and high power consumption. FIG. 1 illustrates a traditional voltage regulating circuit for an isolated switching mode power supply, in which the word "isolated" means the grounding terminals for each side of the transformer is independent, in this circuit, the output voltage at the output terminal remains stable; however, when the LED operates under a high temperature condition for a period of time, the threshold voltage of the LED could drop, which leads to a higher operating current. Therefore, in practical applications of a voltage regulating circuit, when the supplied voltage remains stable, the LED could be damaged by the increasing operating current. FIG. 2 illustrates a prior art non-isolated constant current power supply. Although in this circuit the output current from the output terminal remains constant, in cases of multiple LED loads connected in parallel, the output current could be unevenly distributed in different branches of the LED chips, when LED chips in one branch are damaged accidentally, all other branches could be damaged as well. Furthermore, the circuits described above usually are implemented with a large number of circuit elements that could consume a lot of power, particularly the power transistor used in these applications, which can make it difficult for the LED lamp circuit to save power as it intends to.

Metal oxide semiconductor field effect transistor (MOSFET) is one of the basic elements for most integrated circuits. A depletion-type MOSFET comprises a source terminal (S), a gate terminal (G) and a drain terminal (D). An N-channel depletion-type MOSFET has a doped layer (or channel) situated near the surface of the gate terminal. This doped layer is used for connecting the source terminal and the drain terminal and has a same polarity as those of the source terminal and the drain terminal. Same as an enhancement-type MOSFET, when the voltages of the gate terminal and the source terminal of the depletion-type MOSFET are positive, the saturation current increases as the voltages rise. In a case the gate terminal and the source terminal are of the same voltage level, when a positive voltage is applied to the drain terminal, the depletion-type MOSFET switches from the linear region where the current increases rapidly; as to the saturation region where the current remains constant, the voltage at the drain terminal is called a saturation voltage, and the magnitude of the drain current is determined by the carrier concentration and the depth of the doped layer. Therefore, when the concentration and the depth increase, the magnitude of the current gets bigger. When a negative voltage is applied between the gate terminal and the source terminal, the channel is cut off and the current is zero, the voltage of the gate terminal is defined as the open circuit voltage; however, when the concentration of the channel is too high and the depth of the channel is too deep, it becomes difficult to cut off the channel current by applying negative voltage to the gate terminal. For the depletion type MOSFET, when the voltages at the gate terminal and the source terminal are zero, the source terminal is switched on and has a constant leak current, making it less popular than the enhancement-type MOSFET for logic applications and for stand-alone components. Since the depletion-type MOSFET is switched on when the voltage of the gate terminal is zero and the current remains constant as the voltage of the drain terminal increases until the drain avalanche breakdown occurs, therefore it can be applied as a constant current source.

### SUMMARY OF THE INVENTION

In order to overcome the deficiencies of above questions, the present invention discloses an LED lamp circuit having a simple structure, high efficiency, energy saving and longer lifetime.

In an aspect of the present invention, an LED lamp circuit comprises a rectifying-filtering circuit, an LED load, a constant current source, and a fan driving circuit, wherein an AC power passes through the rectifying-filtering circuit for rectifying and filtering to a DC power and so as to form an output terminal and a grounding terminal, wherein the LED lamp circuit is formed by cascading the LED load and the constant current source between the output terminal and the grounding terminal.

The LED lamp circuit further comprises a voltage regulating circuit connected to the rectifying-filtering circuit, wherein the voltage regulating circuit regulates the DC power generated by passing an AC power through the rectifying-filtering circuit to provide a constant DC power to the LED load and the constant current source cascaded between the output terminal and the grounding terminal.

The voltage regulating circuit is a switching mode power supply and the voltage regulating circuit comprises a power factor correcting circuit.

The fan driving circuit is mutually cascaded with the LED load and the constant current source between the output terminal and the grounding terminal; alternatively, the fan driving circuit is connected to the voltage regulating circuit to be powered by the voltage regulating circuit.

The fan driving circuit comprises a fan control module and a shunt resistor connected in parallel with each other.

The constant current source is a depletion-type field effect transistor, the depletion-type field effect transistor has its drain terminal acted as a first contact, and the depletion-type field effect transistor has its source terminal and gate terminal connected with each other to act as a second contact.

The LED load comprises at least one set of mutually cascaded LED chips.

Each set of mutually cascaded LED chips is cascaded with a constant current source and is then connected with other sets of mutually cascaded LED chips in parallel between the output terminal and the grounding terminal.

Alternatively, each set of mutually cascaded LED chips is connected with other sets of mutually cascaded LED chips in parallel and is then cascaded with the constant current source.

The LED lamp circuit further comprises a shortage protection circuit connected between an input of the AC power and one end of the rectifying-filtering circuit.

In another aspect of the present invention, an LED lamp circuit comprises a rectifying-filtering circuit, a voltage regulating circuit, an LED load, a constant current source, and a timer circuit, wherein an AC power passes through the rectifying-filtering circuit for rectifying and filtering to a DC power and further through the voltage regulating circuit for regulating to a constant DC power so as to form an output terminal and a grounding terminal, wherein the LED lamp circuit is formed by cascading the LED load and the constant current source between the output terminal and the grounding terminal, and the timer circuit is connected with the voltage regulating circuit for providing a scheduled feedback signal to the voltage regulating circuit to change an output voltage of the voltage regulating circuit.

The LED lamp circuit further comprises a fan driving circuit for providing power to a heat dissipating fan of an LED lamp.

The voltage regulating circuit is a switching mode power supply and the voltage regulating circuit comprises a power factor correcting circuit.

The fan driving circuit is mutually cascaded with the LED load and the constant current source between the output terminal and the grounding terminal; alternatively, the fan driving circuit is connected to the voltage regulating circuit to be powered by the voltage regulating circuit.

The fan driving circuit comprises a fan control module and a shunt resistor connected in parallel with each other.

The constant current source is a depletion-type field effect transistor, the depletion-type field effect transistor has its drain terminal acted as a first contact, and the depletion-type field effect transistor has its source terminal and gate terminal connected with each other to act as a second contact.

The LED load comprises at least one set of mutually cascaded LED chips.

Each set of mutually cascaded LED chips is cascaded with a constant current source and is then connected with other sets of mutually cascaded LED chips in parallel between the output terminal and the grounding terminal.

Alternatively, each set of mutually cascaded LED chips is connected with other sets of mutually cascaded LED chips in parallel and is then cascaded with the constant current source.

The LED lamp circuit further comprises a shortage protection circuit connected between an input of the AC power and one end of the rectifying-filtering circuit.

The advantage of the present invention is that, the present invention comprises a rectifying-filtering circuit, an LED load, a constant current source, and a fan driving circuit, wherein an AC power passes through the rectifying-filtering circuit for rectifying and filtering to a DC power and so as to form an output terminal and a grounding terminal, wherein the LED lamp circuit is formed by cascading the LED load and the constant current source between the output terminal and the grounding terminal. The present invention innovatively combines the fan driving circuit with the LED load and the constant current source, so when the LED load is in operation, the fan driving circuit drives the fan to actively dissipate the heat generated by the LED load; therefore the present invention can provide better heat dissipation effect than the traditional passive ones to prevent the LED chip from operating under a high temperature condition and to effectively prolong the lifetime of the LED chip. In addition, the use of the active heat dissipation mechanism as disclosed here can reduce the size of the bulky heat sink to implement a LED lamp with a simpler structure, a smaller size, and longer lifetime while compared with the traditional LED lamps. The rectifying-filtering circuit converts the AC power into the DC power, even when the LED load operates under a high temperature condition for a period of time, the constant current source can prevent the current flowing to the LED lamp circuit from rising, and the voltage drop of the LED load is complemented by the constant current source to prolong the lifetime of the LED load. Besides, the constant current source is implemented as a stand alone element to conveniently replace other voltage regulating and over-current protection circuit to simplify the structure of the LED lamp circuit; therefore, the present invention can provide advantages such as simple structure, high efficiency, low power consumption, energy saving, and longer lifetime.

The present invention further comprises a voltage regulating circuit connected to an output of the rectifying-filtering circuit, wherein the voltage regulating circuit regulates the DC power generated by passing an AC power through the rectifying-filtering circuit to provide a constant DC power to the LED load and the constant current source cascaded between the output terminal and the grounding terminal. Therefore, the LED lamp circuit can provide constant and stable voltage output to the LED chips to facilitate the operation of the LED lamp with higher efficiency and longer lifetime; therefore the present invention not only provides constant current source but also provides voltage regulating function to achieve better performance and longer lifetime.

The present invention comprises a timer circuit connected with the voltage regulating circuit for providing a scheduled feedback signal to the voltage regulating circuit to change an output voltage of the voltage regulating circuit. The present invention innovatively combines the constant current source, the timer circuit, and the voltage regulating circuit with the LED load. When the LED lamp circuit starts operation, the LED load receives more power to output higher voltage with a higher brightness, when a predetermined time is reached, the timer circuit provides a scheduled feedback signal to the voltage regulating circuit to lower the output voltage of the voltage regulating circuit; therefore, the LED lamp outputs a lower voltage with a dimmer brightness. For LED lamps such as the street lamp, garden light and porch light, the LED lamp should be as bright as possible to provide good illumination when the night comes, but when it's late in the night, the LED lamp could be dimmer to save power. On the other hand, the voltage regulating circuit can output a lower voltage when it starts operation, when a predetermined time is reached, the timer circuit provides a scheduled feedback signal to the voltage regulating circuit to increase the output voltage of the voltage regulating circuit; then the LED lamp outputs a normal voltage with a high brightness. Therefore, the present invention can control the output voltage of the LED lamp for different time periods respectively to change the brightness of the LED lamp and to save power.

The present invention also comprises a shortage protection circuit connected between an input of the AC power supply and the rectifying-filtering circuit to provide over-current and over-voltage protection.

### BRIEF DESCRIPTION OF THE DRAWINGS

FIG. 1 illustrates a traditional voltage regulating circuit for an isolated switching mode power supply;
FIG. 2 illustrates a prior art non-isolated constant current power supply;
FIG. 3 illustrates a circuit diagram of a first embodiment of the present invention;
FIG. 4 illustrates a circuit diagram of a second embodiment of the present invention;
FIG. 5 illustrates a circuit diagram of a third embodiment of the present invention;
FIG. 6 illustrates a circuit diagram of a fourth embodiment of the present invention;
FIG. 7 illustrates a structural view of the LED lamp used in the present invention;
FIG. 8 illustrates a circuit diagram of a fifth embodiment of the present invention;
FIG. 9 illustrates a circuit diagram of a sixth embodiment of the present invention;
FIG. 10 illustrates a circuit diagram of a seventh embodiment of the present invention;
FIG. 11 illustrates a circuit diagram of an eighth embodiment of the present invention;
FIG. 12 illustrates a circuit diagram of a ninth embodiment of the present invention; and
FIG. 13 illustrates a circuit diagram of a tenth embodiment of the present invention.

### DEENDED DESCRIPTION OF THE PREFERRED EMBODIMENT

### First embodiment:

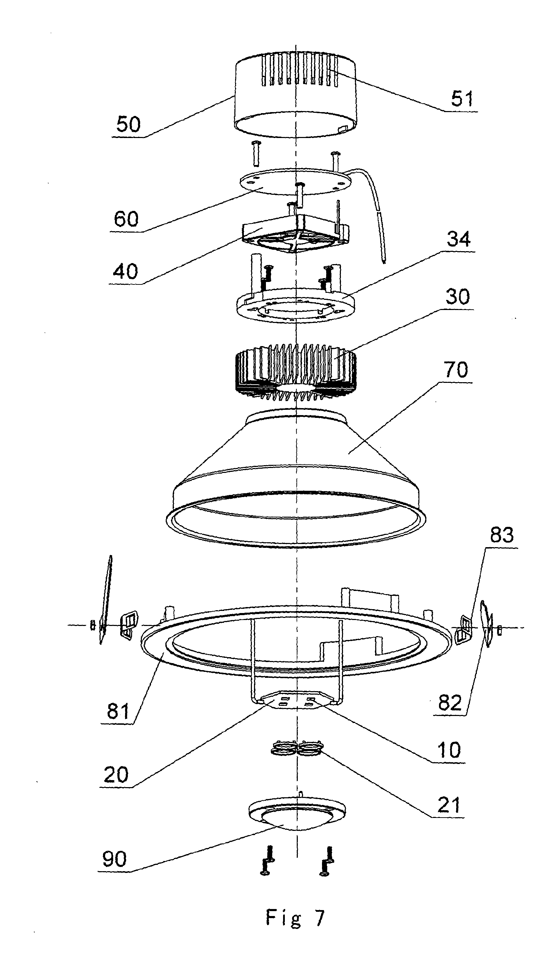

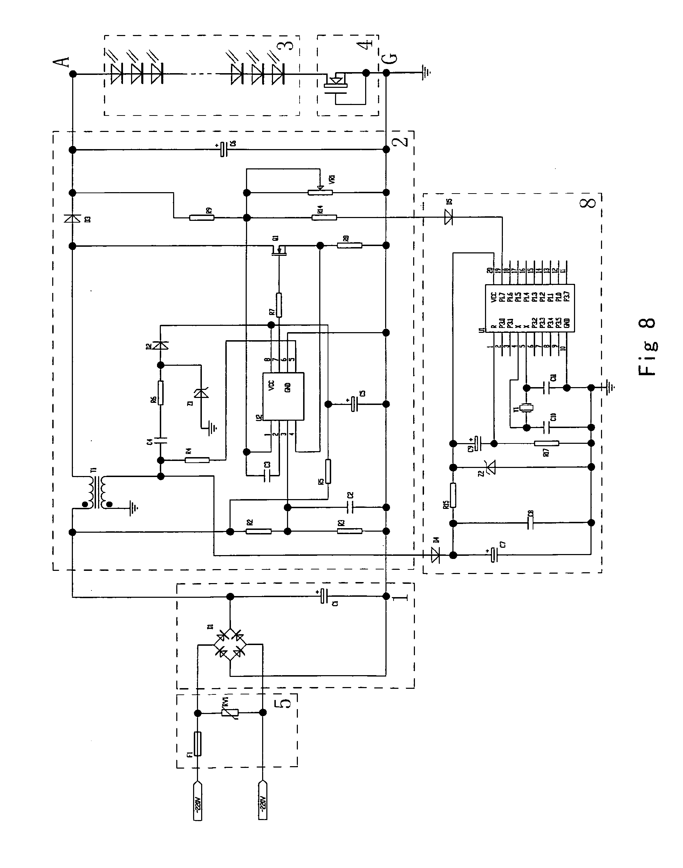

As shown in FIG.7, a LED lamp of the present invention is a high power LED lamp with a fan for use in the ceiling, and the LED lamp comprises a LED heat sink 20, a metal heat dissipation element 30, a heat dissipating fan 40, a case 50, a driving circuit board 60, a reflector cup 70, a fastener 34, a ring element 81, a spring plate 82, and a gripper 83. The LED heat sink 20 is fixed with a plurality of high power LED chips 10 (i.e. LED load 3 in FIG. 8) thereon. The perimeter of each LED chip 10, on the LED heat sink 20, fixes with a coffer 21 filled with phosphor and optical resin. The coffer21 retains the phosphor and the optical resin during the manufacturing process to improve the production efficiency. A protection cover 90 covers the LED heat sink 20 along with the LED chip 10. The metal heat dissipation element 30 is formed as a fin-like heat sink. The case 50 is configured with ventilation holes 51 thereon. The metal heat dissipation element 30 is connected with the LED heat sink 20 for dissipating heat. The heat dissipating fan 40 and the driving circuit board 60 is in the case 50, and the metal heat dissipation element 30 is disposed between the heat dissipating fan 40 and the LED heat sink 20. The metal heat dissipation element 30 is fixedly connected with the heat dissipating fan 40 through the fastener 34. The LED heat sink 20 and the LED chip 10 are disposed in the reflector cup 70, which is made of aluminium or other heat-conducting materials. An end of the reflector cup 70 is connected with the metal heat dissipation element 30 for dissipating heat. The ring element 81 is disposed at a big opening of the reflector cup 70 for decoration purpose and for embedding the LED lamp into the ceiling, wherein the spring plate 82 and the gripper 83 are connected with the ring element 81 to facilitate the installation.

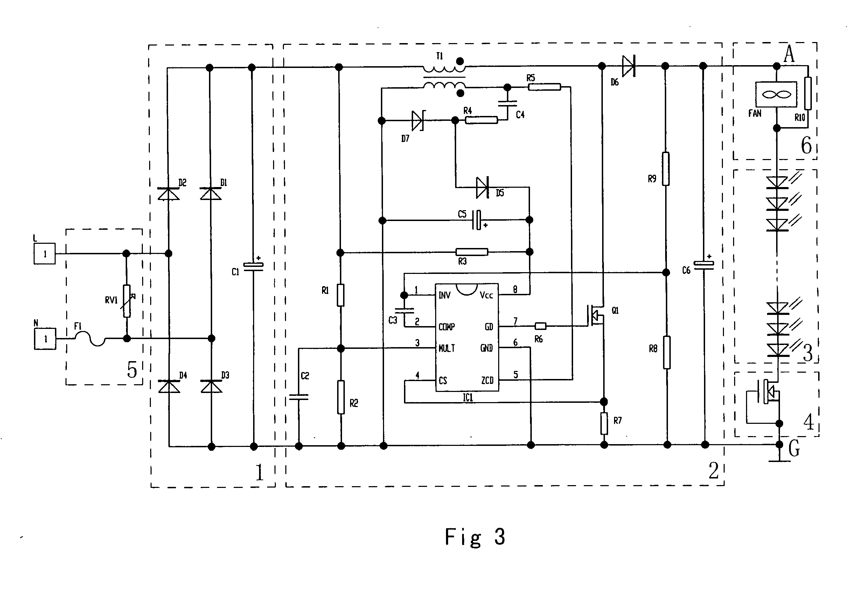

As shown in FIG. 3, the LED lamp circuit comprises a rectifying-filtering circuit 1, a voltage regulating circuit 2, an LED load 3, a constant current source 4, a shortage protection circuit 5, and a fan driving circuit 6, wherein an AC power passes through the rectifying-filtering circuit 1 for rectifying and filtering to a DC power and so as to form an output terminal A and a grounding terminal G. The voltage regulating circuit 2 connected with the rectifying-filtering circuit 1. The AC power passes through the rectifying-filtering circuit 1 for rectifying and filtering to the DC power and further through the voltage regulating circuit 2 for regulating to a constant DC power for the fan driving circuit 6, the LED load 3 and the constant current source 4 cascaded between the output terminal A and the grounding terminal G. The rectifying-filtering circuit 1 comprises a bridge rectifying circuit consisted of four rectifying diodes D1, D2, D3 and D4, and filtering capacitor C1. The shortage protection circuit 5 comprises a fuse F1 and a Voltage Dependent Resistor (VDR, or Varistor) RV1 for over-current and over-voltage protection. The shortage protection circuit 5 is connected between the input of the AC power source and the rectifying-filtering circuit 1. The fan driving circuit 6 comprises a fan control module FAN and a shunt resistor R10 connected in parallel with each other. The constant current source 4 comprises a depletion-type field effect transistor. A drain terminal of the depletion-type field effect transistor is acted as a first contact, and source terminal and gate terminal of the depletion-type field effect transistor are connected with each other to act as a second contact. The voltage regulating circuit 2 is a switching mode power supply and comprises a power factor correcting circuit IC1. The power factor correcting circuit IC1 can be a L6561 PFC from ST Company, which has the advantages of simple structure and high efficiency and is widely applied in various power supply circuit for energy saving purpose. Other circuit elements of the LED lamp circuit comprise capacitors C2 to C6, resistors R1 to R9, diodes D5 to D7, MOSFET Q1, and a transformer T1. The LED load 3 comprise a set of mutually cascaded LED chips, and the set of LED chips is then connected with the constant current source 4 and the fan driving circuit 6 in series between the output terminal A and the grounding terminal G to form a closed loop. The number of the cascaded LED chips is determined by the voltage V₀ at the output terminal of the voltage regulating circuit 2, the voltage drop V_{D} of the constant current source 4, the voltage drop V_{Fan} of the fan driving circuit 6 and the threshold voltage V_{F} of each LED. Gen erally, the operating voltage of the constant current source 4 is between 2 to 10V, and the operating voltage of fan driving circuit 6 is between 5 to 12V, so the number of the LED chips equals to (V₀ - V_{D} - V_{Fan})/ V_{F}. The AC power is generally AC 220V, and the DC power outputted by the rectifying-filtering circuit 1 is DC 300V, and the output voltage from the voltage regulating circuit 2 is DC 400V; therefore, the constant current source 4 and the fan driving circuit 6 consume only a small portion of the power and help to improve the overall power efficiency.

In the present invention, the depletion-type field effect transistor can be made by the following process:
(1) Growing an oxidation layer on the upper surface of the P-type Si-substrate in a furnace, then using a first photomask to develop a pattern on the oxidation layer, then etching the oxidation layer with a chemical agent containing HF;
(2) Doping the BF₂ or Boron ion into the P-type Si-substrate and heating the Si-substrate to form a P+ guard ring and P+ area contacting the Si substrate;
(3) Using a second photomask to develop a second pattern on the oxidation layer and using dry etching method to etch the oxidation layer, then injecting Arsenic or Phosphorous ion or the mixing of the both into the Si substrate to form N+ heavily doped area, and the N+ source area, the N+ drain area and the N+ guard ring are thus formed;
(4) Using a third photomask to develop a third pattern on the oxidation layer and using a chemical agent containing HF to etch the oxidation layer in the etch stop area, then forming a oxidation layer with high temperature dry/ or wet oxygen, and then injecting Phosphorous ion or additional Boron ion and heating the Si substrate to finally form an N channel and oxidation layer;
(5) Using a fourth photomask to develop a fourth pattern on the oxidation layer and etching the oxidation layer to form drain terminal through holes, source terminal N+ through holes and through holes in P+ substrate; and
(6) Using sputtering or evaporation to deposit metal layer, then using photomask to form a pattern on the metal layer, thereafter, using dry or wet etching method to etch the metal layer to form metal layers for the drain terminal, the source terminal, and the gate terminal and the connecting metal layer.

In this embodiment, a stable voltage output is achieved by using the rectifying-filtering circuit 1 and the voltage regulating circuit 2, even when the LED load 3 works under a high temperature for a period of time, the constant current source 4 can prevent the operating current from increasing and complement the voltage drop on the LED load 3 to prolong the lifetime of the LED load 3. Furthermore, the constant current source 4 is implemented as a stand alone element to conveniently replace other voltage regulating and over-current protection circuit to greatly reduce the number of circuit elements and to simplify the structure of the LED lamp circuit, thereby extending the lifetime of the LED load 3. The saturation current of the depletion-type field effect transistor, when the voltage level of the gate terminal equals to that of the source terminal, can be adjusted according to the requirement of the LED, thereby obtaining a constant current source. Although the voltage at the output terminal of the voltage regulating circuit 2 remains stable, the LED load 3 could have a voltage drop under a high temperature condition for a period of time, at this situation the voltage drop will be added to the voltage across the drain terminal and the source terminal of the depletion-type field effect transistor without affecting the LED load. Meanwhile, when the output voltage becomes unstable, particularly rises beyond the normal level, the extra voltage will also be added to the voltage across the drain terminal and the source terminal of the depletion-type field effect transistor without affecting the LED load, thereby achieve a constant current and providing over-current protection. Therefore, this embodiment can provide stable output voltage and current to the LED load, especially those LED loads requiring longer lifetime. Hence, the present invention can provide advantages such as simple structure, high efficiency, low power consumption, energy saving, and longer lifetime.

The present invention innovatively combines the fan driving circuit 6 with the LED load 3 and the constant current source 4. When the LED load 3 is in operation, the fan driving circuit 6 drives the heat dissipating fan 40 to actively dissipate the heat generated by the LED load 3. Therefore the present invention combines active/passive heat dissipating mechanism to provide better heat dissipation effect than the traditional passive ones to prevent the LED chips from operating under a high temperature condition and to effectively prolong the lifetime of the LED chips. In addition, the use of the active heat dissipation mechanism can reduce the size of the bulky heat sink to implement a LED lamp with a simpler structure, a smaller size, and longer lifetime while compared with the traditional LED lamps

When the LED lamp circuit is in operation, the heat dissipating fan 40 operates as well. The LED chip 10 generates heat as it illuminates, and the generated heat is transmitted through the LED heat sink 20 to the metal heat dissipation element 30for dissipating the heat into the air as other traditional "passive" heat dissipating mechanisms do, meanwhile, the heat dissipating fan 40 will suck or blow away the heat to "actively" force for dissipating heat, thereby preventing the LED chip 10 from working under a high temperature condition and effectively prolonging the lifetime of the LED chips. Furthermore, by using active heat dissipating mechanism, it is possible to reduce the size of the bulky metal heat dissipation element 30; therefore, the LED lamp circuit can provide advantages such as simple structure, high efficiency, low power consumption, energy saving, and longer lifetime. In comparison, under the same condition, a 80W LED lamp usually has a operating temperature as high as 80°C; on the other hand, by using the heat dissipating fan in this embodiment of the present invention, the operating temperature could drop to 40°C, thus a better heat dissipating effect is achieved.

### Second embodiment:

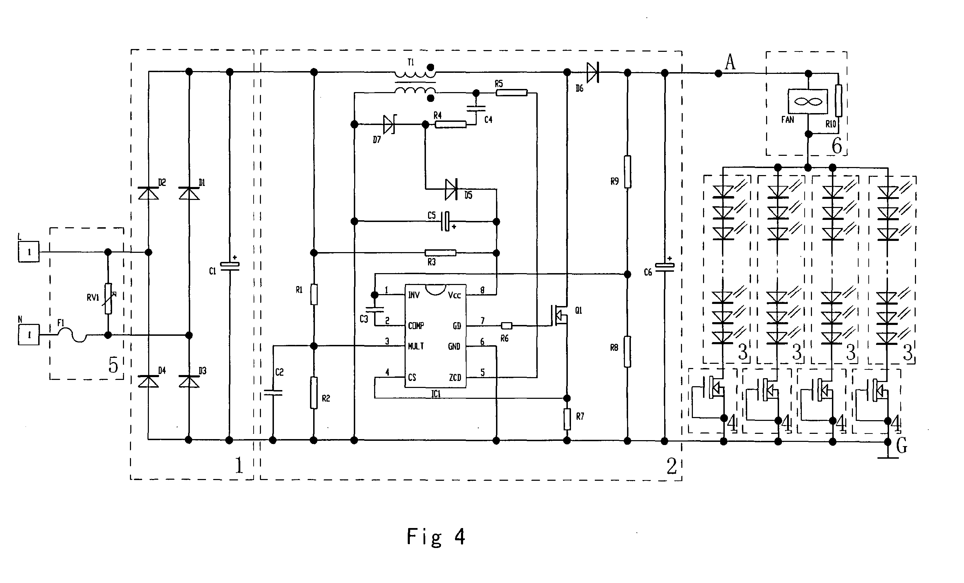

As shown in FIG. 4, this embodiment is different from the first embodiment in that the LED load 3 comprises four sets of mutually cascaded LED chips. Each set of LED chips is connected with a constant current source 4 in series, then the four sets of LED chips are connected in parallel. The four sets of LED chips are cascaded with the fan driving circuit 6. Therefore, there are four constant current sources 4 in this embodiment. In this embodiment, the number of LED chips for each set is calculated in the same way as that of the first embodiment.

The rest of this embodiment is same as that of the first embodiment.

### Third embodiment:

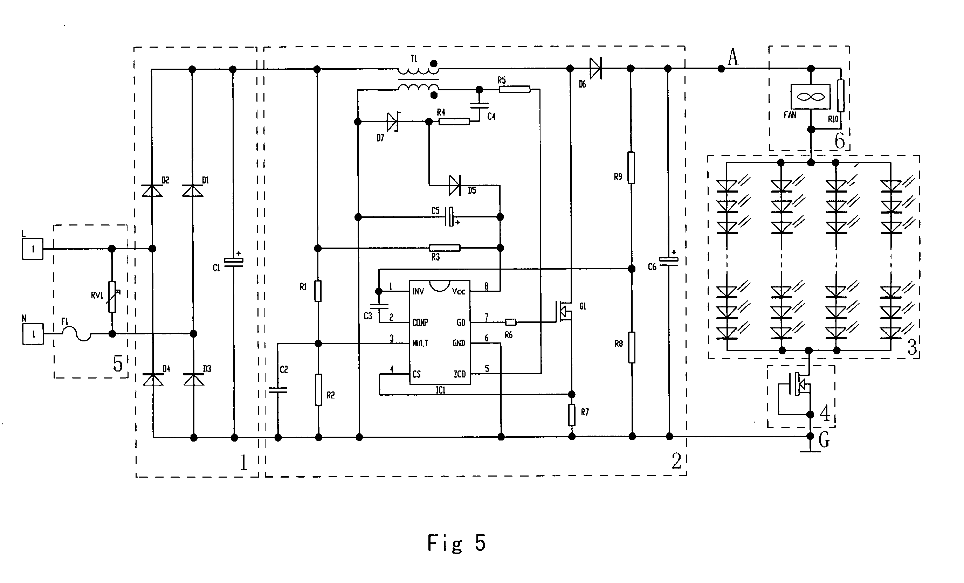

As shown in FIG. 5, this embodiment is different from the first embodiment in that the LED load 3 comprises four sets of mutually cascaded LED chips. Each set of LED chips is connected with other sets of LED chips in parallel, then the four sets of LED chips are connected with the fan driving circuit 6 and the constant current source 4 in series; therefore, there is only one constant current source 4 in this embodiment.

The rest of this embodiment is same as that of the first embodiment.

### Fourth embodiment:

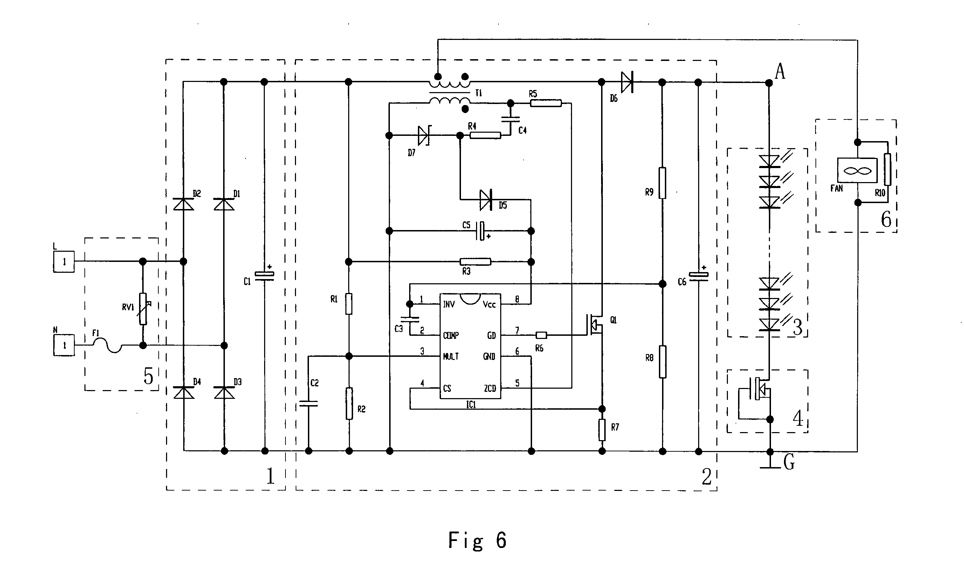

As shown in FIG. 6, this embodiment is different from the first embodiment in that the fan driving circuit 6 taps the transformer T1 of the voltage regulating circuit 2 to get a DC voltage of 5 to 12V, that is, the fan driving circuit 6 is powered separately from the LED load 3 and the constant current source 4. Similarly, the constant current source 4 and the fan driving circuit 6 consume only a small portion of the power and help to improve the overall power efficiency.

The rest of this embodiment is same as that of the first embodiment.

### Fifth embodiment:

As shown in FIG. 8, this embodiment is different from the first embodiment in that the LED lamp circuit in this embodiment further comprises a timer circuit 8 and eliminates the implementation of the heat dissipating fan 40 and the fan driving circuit 6. The timer circuit 8 is connected with the voltage regulating circuit 2 for providing a scheduled feedback signal to the voltage regulating circuit 2 to change an output voltage of the voltage regulating circuit 2. The rectifying-filtering circuit 1 comprises a bridge rectifier D1 and a filtering capacitor C1. The shortage protection circuit 5 comprises a fuse F1 and a voltage dependent resistor (VDR, or Varistor) RV1 for over-current and over-voltage protection, and the shortage protection circuit 5 is connected between the input of the AC power source and the rectifying-filtering circuit 1. The constant current source 4 comprises the depletion-type field effect transistor. A drain terminal of the depletion-type field effect transistor is acted as a first contact, and source terminal and gate terminal of the depletion-type field effect transistor are connected with each other to act as a second contact. The voltage regulating circuit 2 is a switching mode power supply and comprises a power factor correcting circuit IC1. The power factor correcting circuit IC1 can be a L6561 PFC from ST Company, which has the advantages of simple structure and high efficiency and is widely applied in various power supply circuit for energy saving purpose. Other circuit elements of the LED lamp circuit comprise the capacitors C2 to C6, the resistors R1 to R9, R14, a variable resistor VR1, the diodes D2, D3, a zener diode Z1, the MOSFET Q1, and the transformer T1. The variable resistor VR1 can be adjusted according to the number of LED chips in the LED load 3 to control the output voltage of the voltage regulating circuit 2. The timer circuit 8 comprises a single chip microprocessor U1 with a model number 89C2051, of course, other timer circuit IC can be implemented. The peripheral circuit also comprises capacitor C7 to C11, resistors R15, R17, diodes D4, D5, a zener diode Z2, and a crystal oscillator Y1. One end of the diode D5 is connected with a feedback resistor R14 and the other end is connected with the 19^{th} pin of the single chip microprocessor U1. When the LED lamp starts operation, the 19^{th} pin of the single chip microprocessor U1 is at a low voltage level. The current outputted from the first pin of the power factor correcting circuit IC1 flows through the feedback R14, the switched-on diode D5, and the single chip microprocessor U1 to the grounding terminal G. A current loop is thus formed. At this situation, the feedback resistor R14 and the variable resistor VR1 are substantially connected in parallel, therefore the total resistor value is smaller than that of the variable resistor VR1, and the voltage regulating circuit 2 outputs a higher voltage to make the LED load 3 operating normally with a better brightness. When a predetermined time is reached, the 19^{th} pin of the single chip microprocessor U1 is inverted to be at a high voltage level, the current outputted from the first pin of the power factor correcting circuit IC1 does not pass through the feedback resistor R14 and the diode D5, at this situation, the current only flows through the variable resistor VR1, therefore the voltage regulating circuit 2 outputs a lower voltage to make the LED load 3 operating with a dimmer brightness. Hence, for LED lamps such as the street lamp, garden light and porch light, the LED lamp should be as bright as possible to provide good illumination when the night comes, but when it's late in the night, the LED lamp could be dimmer to save power. On the other hand, the voltage regulating circuit 2 can output a lower voltage when it starts operation. Thus, when a predetermined time is reached, the timer circuit 8 provides a scheduled feedback signal to the voltage regulating circuit 2 to increase the output voltage of the voltage regulating circuit; then the LED lamp outputs a normal voltage with a high brightness. Therefore, the present invention can control the output voltage of the LED lamp for different time periods respectively to change the brightness of the LED lamp and to save power. The LED load 3 comprise a set of mutually cascaded LED chips, and the set of LED chips is then connected with the constant current source 4 in series between the output terminal A and the grounding terminal G to form a closed loop. The number of the cascaded LED chips is determined by the voltage V₀ at the output terminal of the voltage regulating circuit 2, the voltage drop V_{D} of the constant current source 4, and the threshold voltage V_{F} of each LED. In general, the operating voltage of the constant current source 4 is between 2 to 10V, so the number of the LED chips equals to (V₀ - V_{D})/ V_{F} The AC power is generally AC 220V, the DC power outputted by the rectifying-filtering circuit1 is DC 300V, and the output voltage from the voltage regulating circuit 2 is DC 400V; therefore, the constant current source 4 and the fan driving circuit 6 consume only a small portion of the power and help to improve the overall power efficiency. Of course, the timer circuit 8 can have other implementations and is not limited to the embodiment.

The rest of this embodiment is same as that of the first embodiment.

### Sixth embodiment:

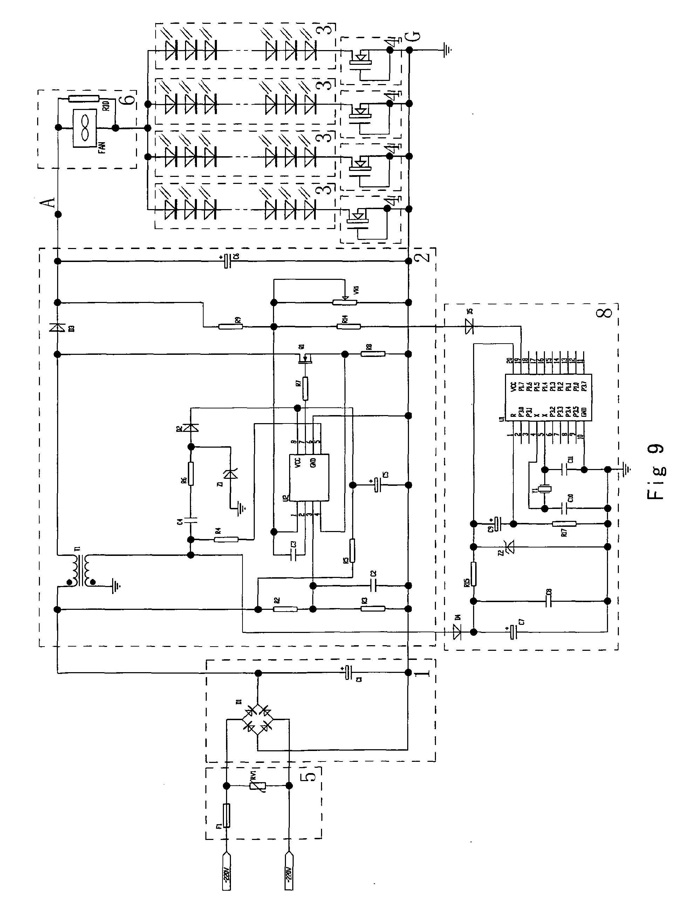

As shown in FIG. 9, this embodiment is different from the fifth embodiment in that the LED lamp circuit in this embodiment further comprises the heat dissipating fan. The LED lamp circuit also comprises the fan driving circuit 6 for powering the heat dissipating fan. The fan driving circuit 6 comprises the fan control module FAN and the shunt resistor R10. The fan control module FAN and the shunt resistor R10 are connected in parallel. The LED load 3 comprises four sets of mutually cascaded LED chips. Each set of LED chips is connected with a constant current source 4 in series, and the four sets of LED chips are connected in parallel. The four sets of LED chips are cascaded with the fan driving circuit 6 between the output terminal A and the grounding terminal G; therefore, there are four constant current source 4 used in this embodiment.

The rest of this embodiment is same as that of the fifth embodiment.

### Seventh embodiment:

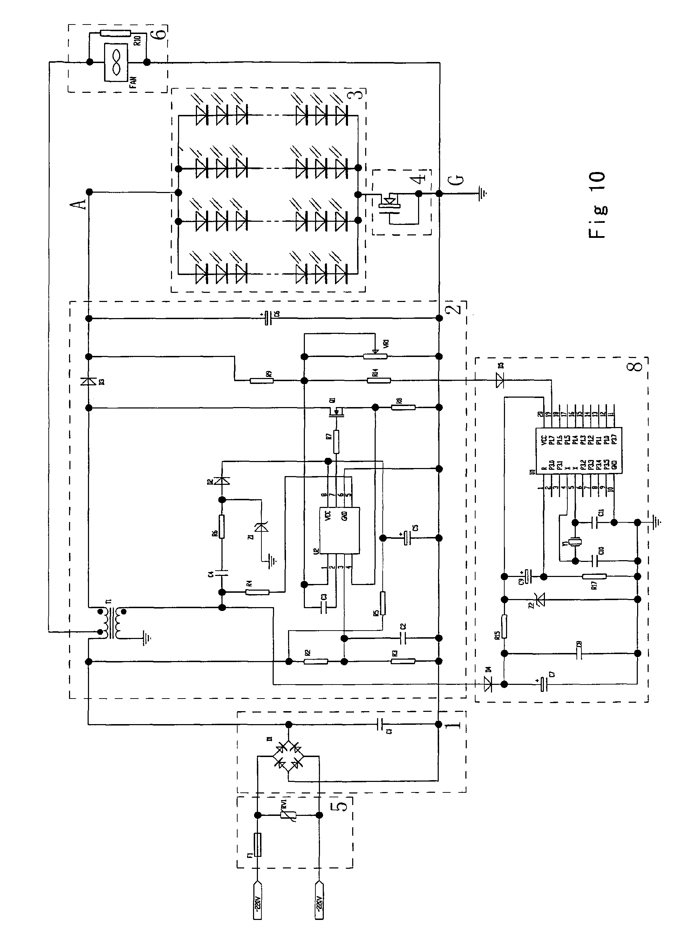

As shown in FIG. 10, this embodiment is different from the sixth embodiment in that the LED load 3 comprises four sets of mutually cascaded LED chips, and the four sets of LED chips are connected in parallel. The four sets of LED chips are cascaded with each other. Each set of LED chips is connected with the constant current source 4 in series between the output terminal A and the grounding terminal G; therefore there is only one constant current sources 4 in this embodiment. Furthermore, the fan driving circuit 6 taps the transformer T1 of the voltage regulating circuit 2 to get a DC voltage of 5 to 12V, that is, the fan driving circuit 6 is powered separately from the LED load 3 and the constant current source 4. Similarly, the constant current source 4 and the fan driving circuit 6 consume only a small portion of the power and help to improve the overall power efficiency.

The rest of this embodiment is same as that of the sixth embodiment.

### Eighth embodiment:

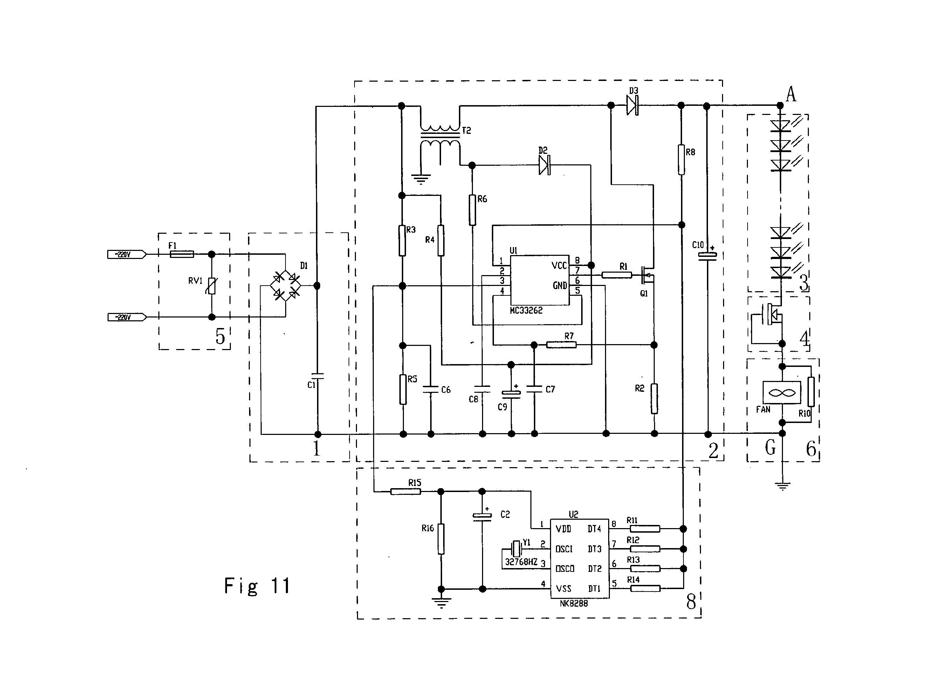

As shown in FIG. 11, this embodiment is different from the fifth embodiment in that the LED lamp circuit in this embodiment further comprises the heat dissipating fan and the fan driving circuit 6 for powering the heat dissipating fan. The fan driving circuit 6 comprises the fan control module FAN and the shunt resistor R10. The fan control module FAN and the shunt resistor R10 are connected in parallel, and the fan driving circuit 6 is directly connected between the output terminal A and the grounding terminal G. The rectifying-filtering circuit 1 comprises the bridge rectifier D1, the filtering capacitor C5 and an EMC filtering circuit consisted of the capacitors C1 to C4, the resistor R2 and the transformer T1. The shortage protection circuit 5 comprises the fuse F4 and the voltage dependent resistor (VDR, or Varistor) R1 for over-current and over-voltage protection. The shortage protection circuit 5 is connected between the input of the AC power source and the rectifying-filtering circuit 1. The constant current source 4 comprises the depletion-type field effect transistor. A drain terminal of the depletion-type field effect transistor is acted as a first contact, and source terminal and gate terminal of the depletion-type field effect transistor are connected with each other to act as a second contact. The voltage regulating circuit 2 is a switching mode power supply and comprises a power factor correcting circuit U1. The power factor correcting circuit U1 can be a power factor correcting circuit with a model number MC33262 , which has the advantages of simple structure and high efficiency. Other circuit elements of the LED lamp circuit comprise the capacitors C6 to C10, the resistors R3 to R9, R15, RT1, RT2, the diodes D2, D3, the MOSFET Q1, and the transformer T1. The timer circuit 8 comprises a single chip microprocessor U2 with a model number NK8288 provided by Nanker (Guangzhou) Semiconductor Manufacturing Corp. The peripheral circuit also comprises capacitor C11 to C13, resistors R11 to R14, diodes D4, D5, a three-terminal regulator U3, a zener diode Z2, and a crystal oscillator Y1. One end of the diode D5 is connected with an output terminal of the three-terminal regulator U3 and the other end is connected with the first pin of the single chip microprocessor U2. This embodiment uses the same mechanism for adjusting the brightness of the LED lamp as that in the fifth embodiment.

The rest of this embodiment is same as that of the fifth embodiment.

### Ninth embodiment:

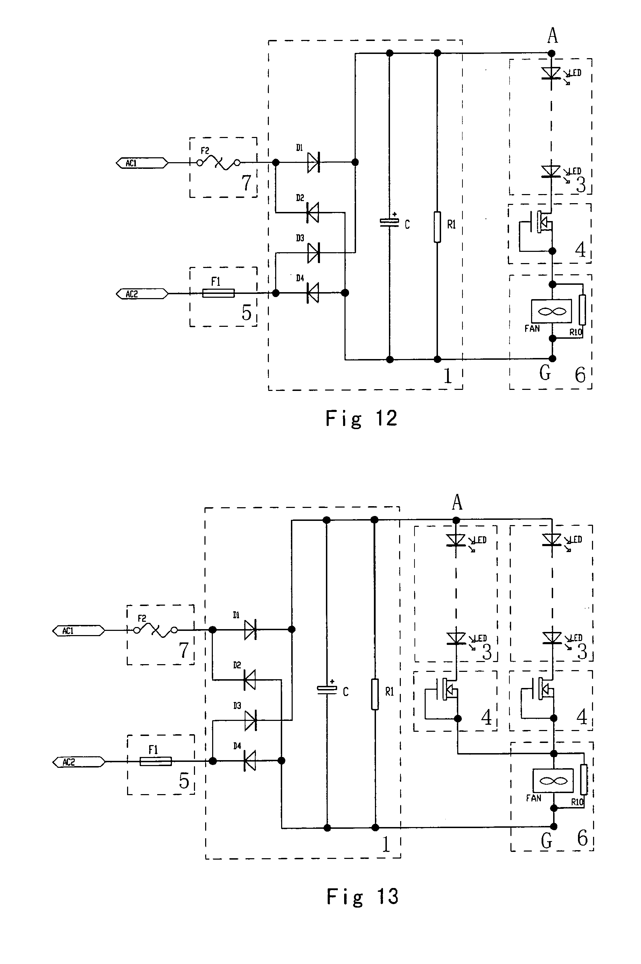

As shown in FIG. 12, this embodiment is different from the first embodiment in that the LED lamp circuit eliminate the need for the voltage regulating circuit 2 and simply provide the DC power through the rectifying-filtering circuit 1; therefore the structure of the LED lamp circuit is simplified and is still able to achieve the basic effect of the present invention.

The rest of this embodiment is same as that of the first embodiment.

### Tenth embodiment:

As shown in FIG. 13, this embodiment is different from the ninth embodiment in that the LED load 3 comprises two sets of mutually cascaded LED chips. Each set of LED chips is connected with another set of LED chips in parallel and is then connected with the fan driving circuit 6 and the constant current source 4 in series; that is, in this embodiment, only one constant current source 4 is used for controlling two sets of LED chips simultaneously.

The rest of this embodiment is same as that of the embodiment ninth.

Although the present invention uses the LED ceiling light as an example, the LED lamp circuit disclosed in this invention is also applicable to other LED lamps such as LED mining light, LED street lamp, LED garden light, LED porch light and other indoor applications, especially suitable for high power LED lamps.

Therefore, the LED lamp circuit disclosed in the present invention is widely applicable in various kinds of LED lamps.

It is noted that the above-mentioned embodiments are only for illustration, it is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### Reference Numerals

rectifying-filtering circuit 1
voltage regulating circuit 2
LED load 3
constant current source 4
shortage protection circuit 5
fan driving circuit 6
LED chip 10
LED heat sink 20
coffer 21
metal heat dissipation element 30
heat dissipating fan 40
case 50
ventilation hole 51
driving circuit board 60
reflector cup 70
fastener 34
ring element 81
spring plate 82
gripper 83
LED protection cover 90

## Claims

1. An LED lamp circuit comprising a rectifying-filtering circuit, an LED load, a constant current source, a fan driving circuit, an output terminal and a grounding terminal for providing a DC power generated by passing an AC power through the rectifying-filtering circuit, wherein the LED lamp circuit is formed by cascading the LED load and the constant current source between the output terminal and the grounding terminal for forming a loop; and wherein the DC power is provided for the fan driving circuit.

2. The LED lamp circuit as claimed in Claim 1 further comprising a voltage regulating circuit connected to the rectifying-filtering circuit, wherein the voltage regulating circuit regulates the DC power generated by passing the AC power through the rectifying-filtering circuit to provide a constant DC power to the LED load and the constant current source between the output terminal and the grounding terminal for forming a loop.

3. An LED lamp circuit comprising a rectifying-filtering circuit, a voltage regulating circuit, an LED load, a constant current source, a timer circuit, an output terminal and a grounding terminal for providing a constant DC power generated by passing an AC power through the rectifying-filtering circuit to provide a DC voltage and then passing the DC power through the voltage regulating circuit, wherein the LED lamp circuit is formed by cascading the LED load and the constant current source between the output terminal and the grounding terminal; and wherein the timer circuit is connected with the voltage regulating circuit for providing a scheduled feedback signal to the voltage regulating circuit to change an output voltage of the voltage regulating circuit.

4. The LED lamp circuit as claimed in Claim 3 further comprising a fan driving circuit for providing power to a heat dissipating fan of an LED lamp, wherein the constant DC power is provided for the fan driving circuit.

5. The LED lamp circuit as claimed in Claim 1, 2 or 4, wherein the fan driving circuit comprises a fan control module and a shunt resistor connected in parallel with each other.

6. The LED lamp circuit as claimed in Claims 1, 2, 4 or 5, wherein the fan driving circuit is mutually cascaded with the LED load and the constant current source between the output terminal and the grounding terminal.

7. The LED lamp circuit as claimed in any one of claims 2 to 6, wherein the voltage regulating circuit is a switching mode power supply and comprises a power factor correcting circuit.

8. The LED lamp circuit as claimed in any one of Claims 2, 4, 5, 6, 7, wherein the fan driving circuit is connected to the voltage regulating circuit powered by the voltage regulating circuit.

9. The LED lamp circuit as claimed in any one of the preceding Claims, wherein the constant current source comprises a depletion-type field effect transistor, wherein a drain terminal of the depletion-type field effect transistor is acted as a first contact, and source terminal and gate terminal of the depletion-type field effect transistor are connected with each other to act as a second contact.

10. The LED lamp circuit as claimed in any one of the preceding Claims further comprising a shortage protection circuit connected between an input of the AC power source and one end of the rectifying-filtering circuit.

11. The LED lamp circuit as claimed in any one of the preceding Claims, wherein the LED load comprises at least one set of mutually cascaded LED chips.

12. The LED lamp circuit as claimed in Claim 11, wherein each set of mutually cascaded LED chips is cascaded with a constant current source and is then connected with other sets of mutually cascaded LED chips in parallel between the output terminal and the grounding terminal.

13. The LED lamp circuit as claimed in Claim 11, wherein each set of mutually cascaded LED chips is connected with other sets of mutually cascaded LED chips in parallel and is then cascaded with the constant current source.
